# EUROPEAN PATENT APPLICATION

(11) **EP 4 830 598 A1**
(43) Date of publication of application: **28.10.2026**
(21) Application number: 24917383.2
(22) Date of filing: 29.04.2024
(51) Int. Cl.: A47J 31/06, A47J 31/44, A47J 31/54, A47J 31/46

(54) **WATER PURIFIER**

(30) Priority: 08.01.2024 KR 20240002768
(71) Applicant: LG Electronics Inc., Yeongdeungpo-gu Seoul 07336 (KR)
(72) Inventor: LEE, Jaeduck, Seoul 08592 (KR); LIM, Hyoung Keun, Seoul 08592 (KR); PARK, Hyun Woo, Seoul 08592 (KR)
(74) Representative: Vossius & Partner Patentanwälte Rechtsanwälte mbB
(86) International application number: PCT/KR2024/005769
(87) International publication number: WO 2025/150622

(57) **Abstract**

A water purifier according to the present invention enables an existing water purifier in use to extract beverages from capsules by installing a capsule holder assembly onto same. The capsule holder assembly provided in the water purifier of the present invention comprises: a pump module which includes a water pump; and a holder mounting module to which a capsule holder can be mounted and which is coupled to an outlet duct.

## Description

The present disclosure relates to a water purifier and, more particularly, to a water purifier having a new type of capsule holder assembly configured to enable extraction of a capsule beverage in the water purifier.

In general, a water purifier is a device that removes impurities contained in water by using a filter and then supplies the water.

Such a water purifier may provide only filtered purified water or may selectively provide purified water and hot water or cold water according to a type thereof. For example, a water purifier having a heater may selectively provide purified water and hot water, and a water purifier having a cooler may selectively provide purified water and cold water.

Recently, a technology for extracting a capsule beverage from a water purifier has been provided.

For example, in the case of Korean Utility Model Application Publication No. 20-2011-0006136 (Prior Art 1), a technology is provided in which a water pump and a pressurized-hot-water heater are provided in a water purifier so that a beverage in a capsule may be extracted at high temperature and high pressure by operation of the water pump and operation of the pressurized-hot-water heater.

In addition, in the case of Korean Patent Application Publication No. 10-2015-0083335 (Prior Art 2), a technology relating to arrangement of components for solving problems caused when a water purifier and a beverage extraction device are integrated is provided.

In addition, in the case of Korean Patent No. 10-1595475 (Prior Art 3), a technology is provided in which a pump and a heater are provided, coffee in a capsule is extracted by high-temperature and high-pressure extraction water, and then hot water for dilution is additionally supplied to produce diluted coffee.

However, in the conventional water purifiers disclosed in the above-described Prior Arts 1 to 3, a pump or a heater for extracting a capsule beverage is integrally provided in the water purifier. That is, in order to smoothly extract a capsule beverage, pressure equal to or greater than a certain water pressure is required to be provided, but since a general water purifier is not provided with the pump, it was not possible to provide extraction water having sufficient water pressure for extracting the capsule beverage.

Accordingly, an existing water purifier in which a pump or heater for extracting the capsule beverage is not provided could not perform a function for extracting the capsule beverage.

In addition, in the conventional water purifiers disclosed in the above-described Prior Arts 1 to 3, a capsule holder on which a capsule is seated is provided integrally with the corresponding water purifier at the time of manufacture of the water purifier. That is, the conventional technologies are not additionally applicable to a water purifier being used in a corresponding household, but are integrally applied only to a new water purifier.

Accordingly, there has been a complaint that a consumer having an existing water purifier has no choice but to separately purchase a dedicated extraction machine or newly purchase a water purifier having a function of extracting a capsule beverage in order to extract the capsule beverage.

In addition, in the case of the conventional water purifiers disclosed in the above-described Prior Arts 2 and 3, hot water or purified water is supplied through an outlet for extracting a capsule beverage. Accordingly, in the water purifiers disclosed in Prior Arts 2 and 3, even when hot water or purified water is supplied, the pump performs pumping at the same water pressure as when the capsule beverage is extracted, and thus there has been a problem in that water flows to the surroundings in a process in which the water is discharged through the beverage outlet.

An objective of the present disclosure is to allow a user to selectively and easily install a new type of capsule holder assembly even in a water purifier currently used in an existing household.

In addition, an objective of the present disclosure is to allow a function for extracting a capsule beverage to be performed even in an existing water purifier in which a pump for extracting the capsule beverage is not provided.

In addition, an objective of the present disclosure is to allow hot water, purified water, or an extracted beverage to be selectively provided through the same outlet while preventing drinking water from flowing to the surroundings due to excessive water pressure when the hot water or the purified water is provided.

According to a water purifier of the present disclosure, a holder mounting module detachably installed on an outlet duct of the water purifier may be provided.

According to the water purifier of the present disclosure, a pump module provided as a module detachable from the water purifier and configured to pump drinking water in a flow line may be provided.

According to the water purifier of the present disclosure, the pump module may be modularized and provided in a separate casing.

According to the water purifier of the present disclosure, the pump module may pump the drinking water to reach a set water pressure.

According to the water purifier of the present disclosure, the pump module may include a heater.

According to the water purifier of the present disclosure, the heater may be provided in a cabinet of the water purifier.

According to the water purifier of the present disclosure, a first connection line configured to guide the drinking water to a water pump may be connected to the pump module.

According to the water purifier of the present disclosure, a second connection line configured to provide, to the flow line, high-pressure drinking water that has passed through the water pump may be connected to the pump module.

According to the water purifier of the present disclosure, the pump module may be coupled to an outer surface of the cabinet.

According to the water purifier of the present disclosure, the pump module may be installed inside the cabinet.

According to the water purifier of the present disclosure, a capsule holder may be selectively mounted to the holder mounting module.

According to the water purifier of the present disclosure, the holder mounting module may be provided with a dispensing nozzle connected to a discharge nozzle in the outlet duct.

According to the water purifier of the present disclosure, the discharge nozzle and the dispensing nozzle may be directly connected to each other or may be connected to each other by using a separate connection nozzle.

According to the water purifier of the present disclosure, the holder mounting module may be provided with a duct coupling portion coupled to the outlet duct.

According to the water purifier of the present disclosure, the duct coupling portion of the holder mounting module may have an upper surface, a peripheral wall, and a bottom surface and may be formed to have a structure that provides an installation space therein.

According to the water purifier of the present disclosure, the holder mounting module may include an engaging hook having a first end positioned in the duct coupling portion and a second end passing sequentially through the upper surface of the duct coupling portion and a bottom surface of the outlet duct and retained in the outlet duct.

According to the water purifier of the present disclosure, the engaging hook may include a plurality of engaging hooks, and the plurality of engaging hooks may be respectively positioned at opposite side portions of the duct coupling portion.

According to the water purifier of the present disclosure, push buttons configured to manually press the engaging hooks may be provided on opposite side wall surfaces of the duct coupling portion.

According to the water purifier of the present disclosure, an anti-rotation protrusion and an anti-rotation groove may be formed on opposing surfaces between the outlet duct and the duct coupling portion so as to engage with each other in order to prevent rotation of the duct coupling portion.

According to the water purifier of the present disclosure, the anti-rotation protrusion may include a plurality of anti-rotation protrusions, and the anti-rotation groove may include a plurality of anti-rotation grooves, and the plurality of anti-rotation protrusions and the plurality of anti-rotation grooves may prevent rotation of the duct coupling portion.

According to the water purifier of the present disclosure, an accommodation hole open upward may be formed in the duct coupling portion such that when the duct coupling portion is coupled to the outlet duct, an end of the discharge nozzle is accommodated in the accommodation hole.

According to the water purifier of the present disclosure, the dispensing nozzle may have a first end exposed in the accommodation hole and accommodated in the discharge nozzle, and a second end passing through a bottom surface of the duct coupling portion and protruding downward.

According to the water purifier of the present disclosure, the dispensing nozzle may be formed such that the first end and the second end are positioned on different vertical lines.

According to the water purifier of the present disclosure, a protruding coupling portion may be formed to protrude from the bottom surface of the duct coupling portion.

According to the water purifier of the present disclosure, the protruding coupling portion may be formed as a ring-shaped block surrounding a circumference of the dispensing nozzle on the bottom surface of the duct coupling portion.

According to the water purifier of the present disclosure, an elevating groove gradually inclined upward toward a lateral side and configured to guide upward and downward movement of the capsule holder may be formed in an outer circumferential surface of the protruding coupling portion.

According to the water purifier of the present disclosure, the holder mounting module may include a holder coupling portion to which the capsule holder is coupled.

According to the water purifier of the present disclosure, the holder mounting module may include an elevating guide coupled to the protruding coupling portion and moved upward and downward along the protruding coupling portion by a rotational manipulation in a horizontal direction.

According to the water purifier of the present disclosure, the elevating guide and the capsule holder may be formed to rotate together with each other.

According to the water purifier of the present disclosure, a coupling protrusion may be formed on an outer surface of the elevating guide, and a coupling groove may be formed in the capsule holder, so that the elevating guide may be rotated by rotation of the capsule holder.

According to the water purifier of the present disclosure, the holder mounting module may include a guide member coupled to the elevating guide and having a guide protrusion accommodated in the elevating groove and configured to be moved along the elevating groove.

According to the water purifier of the present disclosure, the capsule holder may be formed to be mounted to the holder coupling portion in a horizontal direction.

According to the water purifier of the present disclosure, an extended rim may be formed on the capsule holder so that the capsule holder may be mounted to the holder coupling portion in the horizontal direction.

According to the water purifier of the present disclosure, a guide groove in which the extended rim is accommodated may be provided in the holder coupling portion so that the capsule holder may be mounted to the holder coupling portion in the horizontal direction.

According to the water purifier of the present disclosure, the holder coupling portion may be provided with a fixed guide in which the guide groove is formed.

According to the water purifier of the present disclosure, stopper steps configured to restrict excessive insertion of the extended rim into the guide groove may be formed at opposite ends of the extended rim of the capsule holder.

According to the water purifier of the present disclosure, a capsule holder assembly may be selectively applied to the water purifier, thereby enabling the water purifier to have a function of extracting a capsule beverage.

In addition, according to the water purifier of the present disclosure, when the capsule holder assembly is applied to an existing water purifier, the capsule holder assembly may be mounted to the existing water purifier without changing a structure of the existing water purifier or with only a simple change, thereby allowing a user to directly mount the capsule holder assembly.

In addition, according to the water purifier of the present disclosure, the pump module may be provided, thereby enabling a function for extracting a capsule beverage to be performed even in an existing water purifier in which a pump for extracting the capsule beverage is not provided.

In addition, according to the water purifier of the present disclosure, hot water, purified water, or an extracted beverage may be selectively provided through the same outlet, and the water pump may not be operated when the hot water or the purified water is provided, thereby preventing a problem in which drinking water flows to the surroundings due to excessive water pressure.

### BRIEF DESCRIPTION OF THE DRAWINGS

FIG. 1 is a side internal view showing a state in which a capsule holder assembly is applied to a water purifier according to an embodiment of the present disclosure and a pump module is installed outside a cabinet.
FIG. 2 is a front view showing a state in which a holder mounting module constituting the capsule holder assembly is coupled to the water purifier according to an embodiment of the present disclosure.
FIG. 3 is a front view showing a state in which the holder mounting module constituting the capsule holder assembly is coupled to the water purifier according to an embodiment of the present disclosure.
FIG. 4 is a partial perspective view illustrating a relationship among the pump module, a heater, and the holder mounting module, which are installed outside the cabinet of the water purifier according to an embodiment of the present disclosure.
FIG. 5 is a side internal view showing a state in which the pump module is installed inside the water purifier according to an embodiment of the present disclosure.
FIG. 6 is a partial perspective view illustrating a relationship among the pump module, the heater, and the holder mounting module, which are installed inside the cabinet of the water purifier according to an embodiment of the present disclosure.
FIG. 7 is a side view illustrating a relationship among the pump module, the heater, and the holder mounting module, which are installed inside the cabinet of the water purifier according to an embodiment of the present disclosure.
FIG. 8 is a perspective view illustrating an internal structure of the pump module provided in the water purifier according to an embodiment of the present disclosure.
FIG. 9 is a flow path circuit diagram schematically showing a configuration of the pump module provided in the water purifier according to an embodiment of the present disclosure.
FIG. 10 is an exploded perspective view illustrating a configuration of the capsule holder assembly provided in the water purifier according to an embodiment of the present disclosure.
FIG. 11 is a front cross-sectional view showing a state in which the capsule holder assembly is installed in the water purifier according to an embodiment of the present disclosure.
FIG. 12 is an assembled perspective view of the holder mounting module provided in the water purifier according to an embodiment of the present disclosure.
FIG. 13 is a cross-sectional view taken along line A-A of FIG. 12.
FIG. 14 is a cross-sectional view taken along line B-B of FIG. 12.
FIG. 15 is a cross-sectional view taken along line C-C of FIG. 12.
FIG. 16 is a cross-sectional view of the capsule holder provided in the water purifier according to an embodiment of the present disclosure.
FIG. 17 is a cross-sectional view showing a state in which the capsule holder is primarily coupled to the holder mounting module mounted to the water purifier according to an embodiment of the present disclosure.
FIG. 18 is a cross-sectional view showing a state in which the capsule holder is completely coupled to the holder mounting module mounted to the water purifier according to an embodiment of the present disclosure.
FIG. 19 is a flow path circuit diagram schematically showing a flow in the pump module when purified water or hot water is supplied from the water purifier according to an embodiment of the present disclosure.
FIG. 20 is a flow path circuit diagram schematically showing a flow in the pump module when a capsule beverage is extracted from the water purifier according to an embodiment of the present disclosure.
FIG. 21 is a flow path circuit diagram schematically showing a flow path of a form in which the heater is included in the pump module of the water purifier according to an embodiment of the present disclosure.
FIG. 22 is a partial perspective view illustrating a relationship between the pump module, in which the heater is included, and the holder mounting module in the water purifier according to an embodiment of the present disclosure.
FIG. 23 is a side view showing a state in which a pump module including a heater is installed outside a water purifier according to another embodiment of the present disclosure.
FIG. 24 is a flow path circuit diagram showing one example of a pump module according to still another embodiment of the present disclosure.
FIG. 25 is a flow path circuit diagram showing another example of the pump module according to still another embodiment of the present disclosure.

### DETAILED DESCRIPTION

Prior to describing embodiments of the present disclosure, when adding reference numerals to components in each drawing, it should be noted that identical components are given the same reference numerals as much as possible even if they are shown in different drawings.

In addition, when describing the embodiments of the present disclosure, if a detailed description of the relevant known configuration or function is judged to hinder understanding of the embodiments of the present disclosure, detailed descriptions thereof will be omitted.

In addition, in describing the components of the embodiments of the present disclosure, terms such as first, second, A, B, (a), and (b) may be used. These terms are only for distinguishing the components from other components, and the nature or order of the components is not limited by the terms. When a component is described as being "connected" or "coupled" to another component, the component may be directly connected to or coupled to the another component, but it should be understood that still another component may be "connected" or "coupled" thereto between each component.

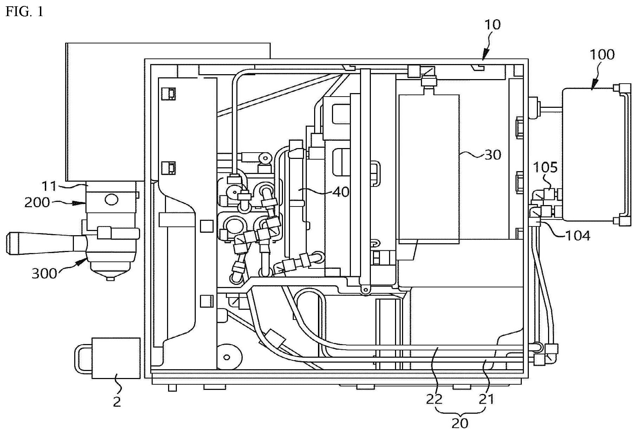

Hereinafter, preferred embodiments of a water purifier having a capsule holder assembly of the present disclosure will be described with reference to FIGS. 1 to 25.

FIG. 1 is a side internal view showing a state in which the capsule holder assembly is applied to a water purifier according to an embodiment of the present disclosure and a pump module is installed outside a cabinet.

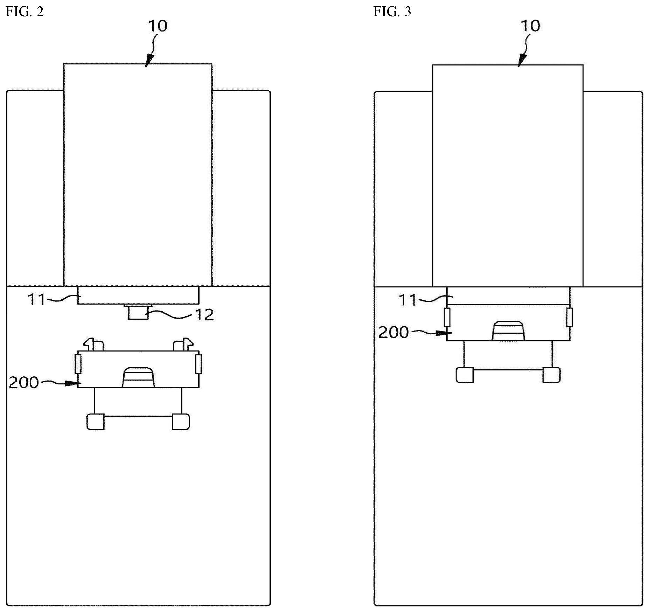

In addition, FIGS. 2 and 3 are front views showing a state in which a holder mounting module is coupled to the water purifier according to an embodiment of the present disclosure.

As shown in these drawings, the water purifier according to an embodiment of the present disclosure is configured such that the capsule holder assembly is additionally installed on an existing water purifier currently in use, thereby allowing a capsule beverage to be extracted.

The water purifier having the capsule holder assembly according to the embodiment of the present disclosure will be described in more detail for each component.

First, the water purifier according to the embodiment of the present disclosure may include a cabinet (10).

The cabinet (10) may be defined as an exterior of the water purifier. The cabinet (10) may be formed as a box-shaped structure providing an installation space so that various components may be installed therein.

As shown in FIGS. 1 to 3, an outlet duct (11) may be provided at one end of the cabinet (10). For example, the outlet duct (11) may be positioned on a front surface of the cabinet (10) and be provided as an area through which drinking water or a beverage is discharged.

The outlet duct (11) may be positioned at an upper front surface of the cabinet (10) and formed as a rectangular box structure having an open upper surface and a bottom surface. Of course, although not shown, the outlet duct (11) may be formed as a circular box structure or another polygonal box structure. Although not shown, the outlet duct (11) may also be formed to have a pipe structure in which both an upper surface and a bottom surface are open.

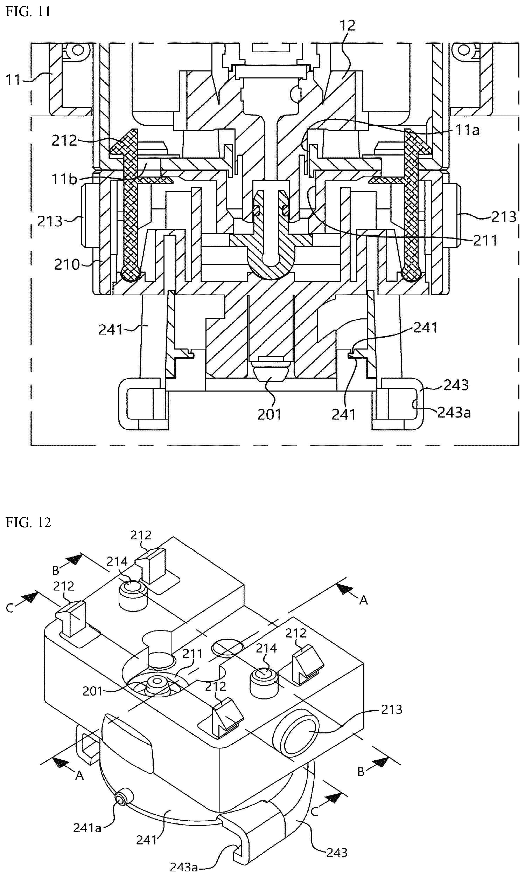

A passage hole (11a) (see FIG. 11) through which a discharge nozzle (12) passes may be formed through a center of the bottom surface of the outlet duct (11).

The discharge nozzle (12) may be a portion through which drinking water guided by a flow line (20), which will be described below, is discharged.

The discharge nozzle (12) may be installed at an end of the flow line (20) and positioned in the outlet duct (11). Accordingly, the drinking water flowing through the flow line (20) may pass through the outlet duct (11) and be supplied to a cup (2) provided below the outlet duct (11).

The discharge nozzle (12) may be formed as any one of a simple water outlet (opening) formed in the outlet duct (11) and a nozzle coupled to the water outlet. In the water purifier according to the embodiment of the present disclosure, the discharge nozzle (12) may be formed as a nozzle installed to pass through the bottom surface of the outlet duct (11). In this case, a lower end of the discharge nozzle (12) may pass through the bottom surface of the outlet duct and protrude downward.

Next, the water purifier according to the embodiment of the present disclosure may include the flow line (20).

The flow line (20) may be a flow path guiding a flow of drinking water to the discharge nozzle (12). That is, the flow line (20) may be defined as all or part of a flow path guiding a flow from receipt of raw water to discharge of the water to the outside of the water purifier. In this case, the flow line (20) may be provided by being divided into a plurality of portions, and in this case, the respective flow lines (20) may be connected to each other by fittings or connected to other components (for example, valves, filters, heaters, or the like). In this case, at least one of the fittings may include a fitting for branching drinking water from the flow line (20).

The flow line (20) may be formed as a pipe or a tube made of metal, ceramic, or synthetic resin.

The flow line (20) may be provided in the cabinet (10) and connected to receive water supplied from the outside. Although not shown, when a water container is provided in the cabinet (10), the flow line (20) may be connected to the water container and formed to guide a flow of water in the water container.

Meanwhile, the flow line (20) may be provided with a filter (30) for purifying drinking water passing through the flow line (20). The filter (30) may include a plurality of filters and may be replaceably installed in any one space in the cabinet (10). Accordingly, the drinking water passing through the flow line (20) may be purified while passing through the filter (30).

Next, the water purifier according to the embodiment of the present disclosure may include a heater (40).

The heater (40) may be defined as a structure or heating element provided to heat drinking water passing through the flow line (20).

The heater (40) may be formed in various structures.

As one example, the heater (40) may be formed as a water block heated by heat generation of a heating element (not shown). In this case, the drinking water flowing along the flow line (20) may be provided into the water block, heated by heat generation of the heating element, and then discharged to the outside of the water block. In this case, the heating element may be embedded in the water block or installed to be in contact with an outer surface of the water block.

As another example, although not shown, the heater (40) may be formed as a coil heater or a planar heating element surrounding the flow line (20). When the heater (40) is formed as the coil heater or the planar heating element, it is preferable to surround the heater (40) with a heat insulating material to prevent the heater (40) from being exposed to the outside.

Next, the water purifier according to the embodiment of the present disclosure may include a pump module (100).

The pump module (100) may be a combination of a water pump (110) configured to pump drinking water flowing along the flow line (20) so that the drinking water has a set water pressure, and components including the water pump (110).

In a conventional general water purifier, drinking water may flow due to water pressure of a raw water line (not shown) connected to an inlet end of the flow line (20). That is, in the conventional water purifier, a pump is not provided, and drinking water flows simply by opening and closing a valve. Accordingly, a capsule beverage may not be smoothly extracted by water pressure of drinking water flowing through the conventional general water purifier.

In consideration of this, the water purifier according to the embodiment of the present disclosure may additionally provide the water pump (110) configured to pump drinking water passing through the flow line (20) to reach a set water pressure, thereby allowing smooth extraction of a capsule beverage.

In particular, the pump module (100) may be manufactured as a kit modularized and provided in a casing (101) separate from the cabinet (10) and may be selectively installed on the cabinet (10).

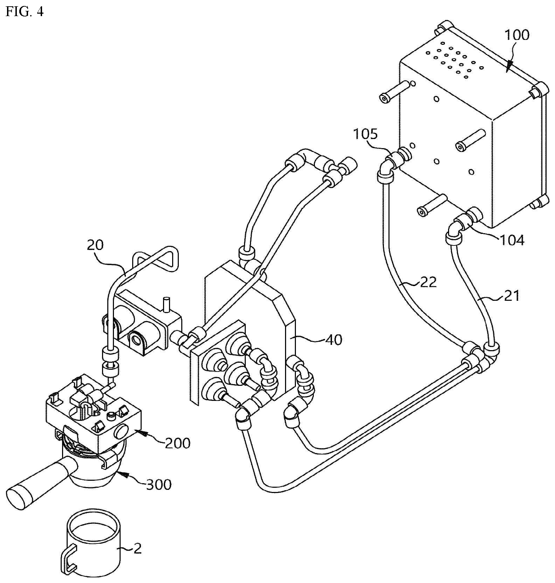

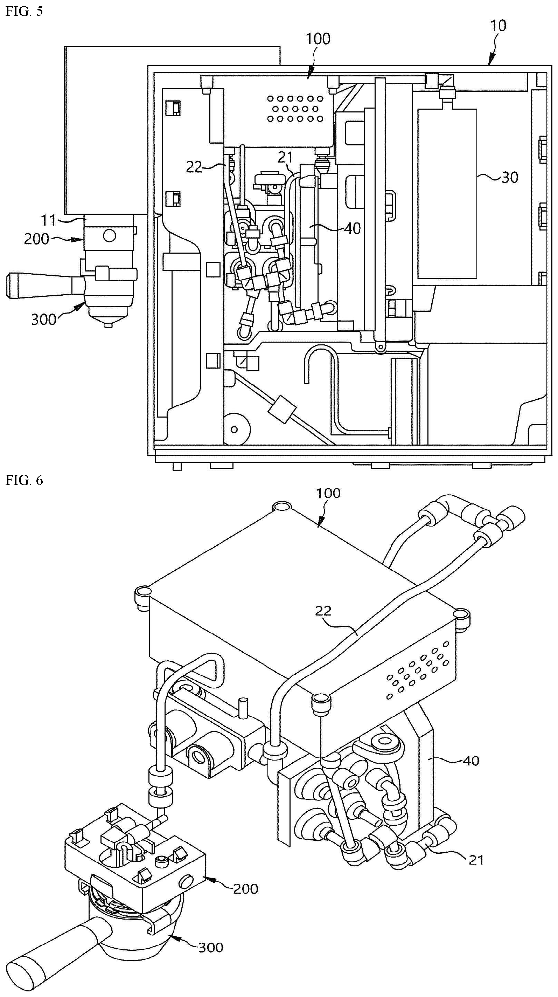

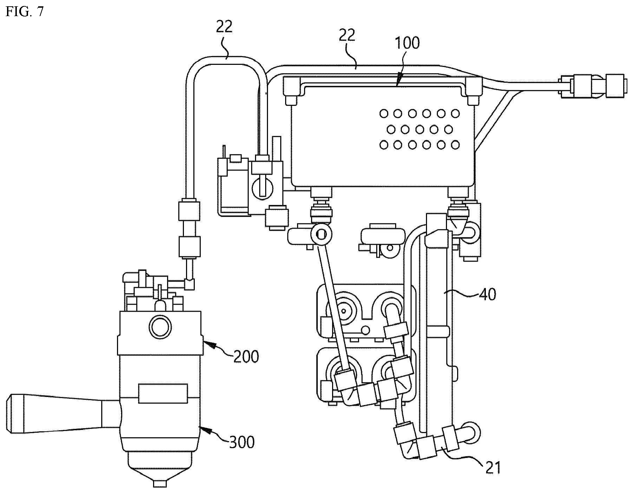

That is, the pump module (100) may be installed either outside the cabinet (10) or inside the cabinet (10). For example, as shown in FIG. 1, the pump module (100) may be installed on an outer surface of a rear wall of the cabinet (10), or as shown in FIG. 5, the pump module (100) may be installed on a lower surface of an upper wall of the cabinet (10). In this case, FIG. 4 is a partial perspective view illustrating a relationship among the pump module, the heater, and the holder mounting module in the installation state of FIG. 1, and FIG. 6 is a partial perspective view illustrating a relationship among the pump module, the heater, and the holder mounting module in the installation state of FIG. 5. FIG. 7 is a state view more specifically showing a relationship among the pump module, the heater, and the holder mounting module.

The installation position of the pump module (100) may be differently determined according to an internal structure of the cabinet (10), a place where the water purifier is installed, a type of the pump module (100), or the like.

Meanwhile, the pump module (100) according to the embodiment of the present disclosure may be configured to selectively discharge drinking water while the drinking water has a high water pressure after passing through the water pump (110), or discharge drinking water at a normal water pressure without passing through the water pump (110).

That is, drinking water introduced into the pump module (100) may pass through the water pump (110) only when a capsule beverage is extracted, and may be discharged without passing through the water pump (110) when general purified water or hot water is supplied.

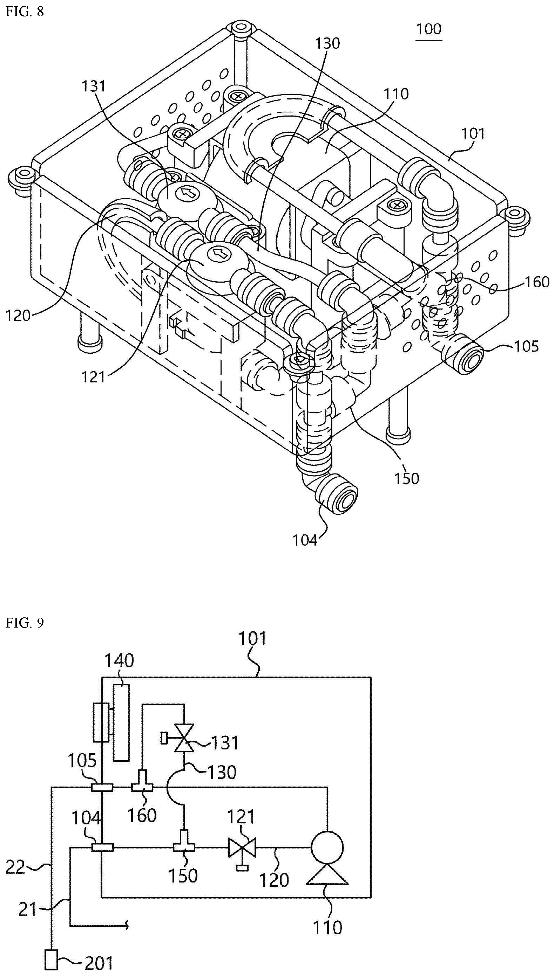

To this end, as shown in FIGS. 8 and 9, the pump module (100) according to the embodiment of the present disclosure may include a first guide flow path (120), a first valve (121) configured to open and close the first guide flow path (120), a second guide flow path (130), a second valve (131) configured to open and close the second guide flow path (130), and a circuit board (140) (see FIG. 9) having a controller configured to control the valves (121, 131).

The first guide flow path (120) may be formed to pass through the water pump (110), and the second guide flow path (130) may be formed so as not to pass through the water pump (110). The guide flow paths (120, 130) and the valves (121, 131) may be provided together with the water pump (110) in a single casing (101). Accordingly, the pump module (100) may be provided as one kit.

The inlet of the first guide flow path (120) and the inlet of the second guide flow path (130), which constitute the pump module (100), may be connected to an inflow line (102) through which drinking water flows into the pump module (100), and the outlet of the first guide flow path (120) and the outlet of the second guide flow path (130) may be connected to an outflow line (103) through which drinking water flows out from the pump module (100).

In this case, the inlets of the guide flow paths (120, 130) may be connected to a first branching fitting (150) connected to an outlet of the inflow line (102), and the outlets of the guide flow paths (120, 130) may be connected to a second branching fitting (160) connected to an inlet of the outflow line (130).

In addition, the inlet of the inflow line (102) and the outlet of the outflow line (103) may be respectively connected to a first external connection fitting (104) and a second external connection fitting (105), which are installed such that portions thereof are exposed to the outside of the casing (101) constituting the pump module (100).

Each of the first external connection fitting (104) and the second external connection fitting (105) may be configured to be connected to the flow line (20) of the water purifier. In this case, the flow line (20) may be provided by being divided into an inflow-side flow line (21) and an outflow-side flow line (22), the inflow-side flow line (21) may be connected to the first external connection fitting (104), and the outflow-side flow line (22) may be connected to the second external connection fitting (105).

Accordingly, the pump module (100) may be easily connected to an existing water purifier.

In addition, only when high-pressure drinking water is required for extracting a capsule beverage, the drinking water in the flow line (20) may flow into the first guide flow path (120) in the pump module (100) and then reach a high pressure while passing through the water pump (110). When general purified water is supplied, the drinking water in the flow line (20) may flow into the pump module (100), flow to the second guide flow path (130), and then be discharged without passing through the water pump (110).

Next, the water purifier according to the embodiment of the present disclosure may include a holder mounting module (200).

As shown in FIG. 1, the holder mounting module (200) may be provided as a portion for mounting a capsule holder (300) in which a capsule (1) is accommodated.

As shown in FIGS. 2 and 3, the holder mounting module (200) may be selectively coupled to the outlet duct (11) provided in the cabinet (10) of the water purifier. That is, the holder mounting module (200), together with the above-described pump module (100), may be coupled to and used with a conventional water purifier.

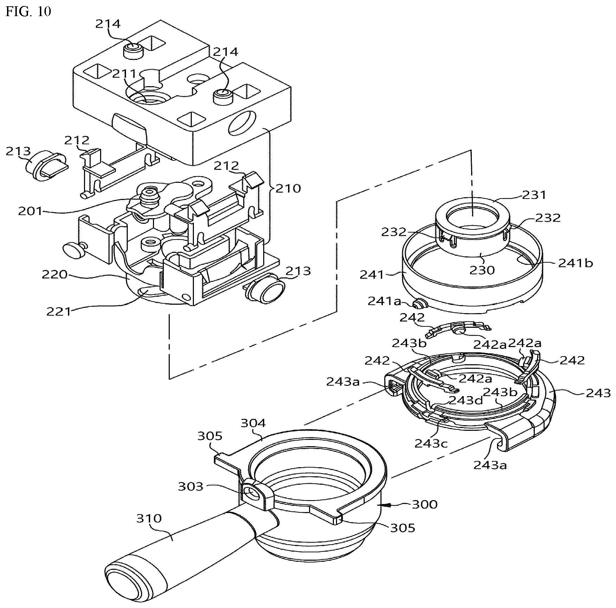

FIGS. 10 to 15 show states in which an external structure and an internal structure of the holder mounting module (200) are viewed from respective directions or at respective positions.

As shown in these drawings, the holder mounting module (200) may include a duct coupling portion (210) coupled to the outlet duct (11) of the cabinet (10). That is, the structure of the duct coupling portion (210) may allow the holder mounting module (200) to be selectively coupled to the outlet duct (11) of an existing water purifier.

The duct coupling portion (210) may be formed as a box body structure having an upper surface, a peripheral wall, and a bottom surface and providing an installation space therein.

In addition, the holder mounting module (200) may be provided with a dispensing nozzle (201) connected to the discharge nozzle (12) in the outlet duct (11). The discharge nozzle (12) and the dispensing nozzle (201) may be directly connected to each other or may be connected to each other by using a separate connection nozzle. To this end, an accommodation hole (211) may be formed in the upper surface of the duct coupling portion (210) such that an end of the discharge nozzle (12) is accommodated when the duct coupling portion (210) is coupled to the outlet duct (11).

The dispensing nozzle (201) may be positioned in the duct coupling portion (210), and may be formed such that a first end thereof is exposed in the accommodation hole (211) so as to be connectable to the discharge nozzle (12) and a second end thereof passes through the bottom surface of the duct coupling portion (210) and protrudes downward.

Meanwhile, the discharge nozzle (12) provided in the water purifier may be positioned at a center in the outlet duct (11), but may also be positioned at a portion eccentric from the center in the outlet duct (11). In consideration of this, even when the discharge nozzle (12) is positioned at a portion eccentric from the center in the outlet duct (11), the first end and the second end of the dispensing nozzle (201) may be formed to be positioned on different vertical lines, so that an outlet through which drinking water is supplied may be positioned at the center of the outlet duct (11) regardless of the position of the inlet of the dispensing nozzle (201). Accordingly, coupling between the outlet of the dispensing nozzle (201) and a gripping cap (400) provided in the capsule holder (300) may be stably maintained.

Although not shown, when the water purifier has a structure in which the discharge nozzle (12) is positioned at the center in the outlet duct (11), the dispensing nozzle (201) in which the inlet and the outlet are positioned on the same vertical line may be used.

In addition, an engaging hook (212) retained in the outlet duct (11) may be provided in the installation space of the duct coupling portion (210).

The engaging hook (212) may have a first end positioned in the duct coupling portion (210) and a second end passing sequentially through the upper surface of the duct coupling portion (210) and the bottom surface of the outlet duct (11) and coupled to the outlet duct (11). An end of the engaging hook (212) may be retained by the bottom surface of the outlet duct (11) and maintained in a state of being coupled to the outlet duct (11) until a separate tilting manipulation occurs.

The engaging hook (212) may include a plurality of engaging hooks (212) and the plurality of engaging hooks (212) may be installed to pass through opposite side portions of the upper surface of the duct coupling portion (210), respectively, and to be exposed upward.

In particular, the engaging hook (212) may be formed to be capable of a tilting manipulation. Accordingly, while the duct coupling portion (210) is coupled to the outlet duct (11), the engaging hook (212) may pass through a coupling hole (11b) formed in the bottom surface of the outlet duct (11) and be coupled to the bottom surface of the outlet duct (11).

In addition, when the duct coupling portion (210) is to be separated from the outlet duct (11), a manipulation of tilting the engaging hook (212) (a tilting manipulation) may be performed.

A push button (213) may be provided so that the tilting manipulation of the engaging hook (212) may be more easily performed. That is, the engaging hook (212) may be tilted by pressing the push button (213).

The push button (213) may be installed to operate elastically while passing through one side wall surface of the duct coupling portion (210). That is, by pressing the push button (213), a first end of the engaging hook (212) positioned in the duct coupling portion (210) may be tilted, so that a second end of the engaging hook (212) may be separated from the coupling hole (11b) formed in the bottom surface of the outlet duct (11).

In particular, the engaging hook (212) may include the plurality of engaging hooks and the plurality of engaging hooks may be respectively positioned on the opposite side portions of the duct coupling portion (210). In this case, the push button (213) may be provided on each of the opposite side wall surfaces of the duct coupling portion (210).

Meanwhile, considering that the engaging hook (212) is formed to be tiltable, the duct coupling portion (210) may be undesirably rotated in a process of coupling the capsule holder (300), which will be described below, to the holder mounting module (200).

In consideration of this, an anti-rotation protrusion (214) and an anti-rotation groove (11c) may be formed on opposing surfaces between the outlet duct (11) and the duct coupling portion (210) so as to engage with each other in order to prevent rotation of the duct coupling portion (210). For example, the anti-rotation protrusion (214) may be formed to protrude from the upper surface of the duct coupling portion (210), and the anti-rotation groove (11c) may be formed through or recessed in the bottom surface of the outlet duct (11). Accordingly, by an operation of bringing the upper surface of the duct coupling portion (210) into close contact with the bottom surface of the outlet duct (11), the anti-rotation protrusion (214) and the anti-rotation groove (11c) may engage with each other.

Although not shown, the anti-rotation groove (11c) formed in the outlet duct (11) may be formed when the water purifier is manufactured, or a separate structure having the anti-rotation groove (11c) may be additionally provided and fixed to the outlet duct (11). That is, the outlet duct (11) may be formed such that a bottom surface thereof is open, and the bottom surface may be provided as a separate structure. In this case, the structure may be formed to provide a portion for penetration and engagement of the above-described engaging hook (11). In this case, the structure may be fixed to the outlet duct (11) by various methods such as an adhesive, an adhesive tape, screw fastening.

In particular, the anti-rotation protrusion (214) and the anti-rotation groove (11c) may respectively include a plurality of anti-rotation protrusions and a plurality of anti-rotation grooves and may be formed at different positions, thereby preventing the duct coupling portion (210) from being undesirably rotated from the outlet duct (11).

A protruding coupling portion (220) may be formed to protrude from the bottom surface of the duct coupling portion (210).

The protruding coupling portion (220) may be integrally formed with the duct coupling portion (210).

Specifically, the protruding coupling portion (220) may protrude downward from the bottom surface of the duct coupling portion (210) and may be formed as a pipe structure having an empty interior or as a ring-shaped block surrounding an outer periphery of the dispensing nozzle (201) exposed to the bottom surface of the duct coupling portion (210).

An elevating groove (221) may be formed in an outer circumferential surface of the protruding coupling portion (220). The elevating groove (221) may be a structure provided for upward and downward movement of the capsule holder (300), which will be described below.

The elevating groove (221) may be formed as a spiral structure gradually inclined upward toward a rotation direction (a direction for perforating the capsule) of the capsule holder (300).

The elevating groove (221) may include two or more elevating grooves (221). In this case, the elevating grooves (221) may be respectively formed at positions symmetrical to each other with respect to an axial center of the protruding coupling portion (220).

Meanwhile, a pressing member (230) for pressing the gripping cap (400), which will be described below, may be provided inside the protruding coupling portion (220).

The pressing member (230) may be positioned to press a periphery of an upper surface of the gripping cap (400), and may be formed as a cylindrical structure having an empty interior and a height of a predetermined length so that the dispensing nozzle (201) exposed to the bottom surface of the duct coupling portion (210) may be positioned therein.

The pressing member (230) may be coupled to the inside of the protruding coupling portion (220). To this end, an engaging step (222) may be formed on an inner circumferential surface of the protruding coupling portion (220), and an engaging hook (232) selectively coupled to the engaging step (222) may be formed on an outer circumferential surface of the pressing member (230).

In addition the pressing member (230) may be configured to elastically move upward and downward so as to push the gripping cap (400) downward when a pressing force applied upward is released.

By such a structure, it is possible to prevent a problem in which the gripping cap (400) is not smoothly separated due to the dispensing nozzle (201), which will be described below, being retained by the gripping cap (400).

In order to allow the pressing member (230) to elastically move, a restoring member (231) may be provided between the bottom surface of the duct coupling portion (210) and the upper surface of the pressing member (230). That is, the pressing member (230) may be pushed downward by the restoring member (231). In this case, the restoring member (231) may be, for example, an elastically restorable ring-shaped washer such as a spring washer or a wave washer.

Next, the holder mounting module (200) may include a holder coupling portion (240) for coupling to the capsule holder (300).

The holder coupling portion (240) may serve to move the capsule holder (300) upward by a left-right pivoting operation of the capsule holder (300) while the capsule holder (300), which will be described below, is coupled thereto.

To this end, the holder coupling portion (240) may include an elevating guide (241) coupled to the protruding coupling portion (220), and the capsule holder (300), which will be described below, may be configured to rotate the elevating guide (241). That is, the elevating guide (241) may be rotated by manipulation of the capsule holder (300) so that the elevating guide (241) may move upward along the protruding coupling portion.

Here, the elevating guide (241) may be coupled to the protruding coupling portion (220) of the duct coupling portion (210) and be formed to be moved upward and downward along the protruding coupling portion (220) by a rotational manipulation in a horizontal direction.

In order to rotate the elevating guide (241), a coupling protrusion (241a) may be formed on an outer surface of the elevating guide (241), and a coupling groove (303) into which the coupling protrusion (241a) is inserted so as to be coupled thereto may be formed in the capsule holder (300). Accordingly, the elevating guide (241) may be rotated by an operation of rotating the capsule holder (300) in a state in which the coupling protrusion (241a) of the elevating guide (241) is coupled to the coupling groove (303)) of the capsule holder (300). In this case, the coupling groove (301) may be formed on an axial direction side defined by a handle (310) of the capsule holder (300). Accordingly, a user may easily couple the coupling protrusion (241a) to the coupling groove (303).

In addition, the elevating guide (241) may be installed on the duct coupling portion (210) so as to be rotatable and movable upward and downward. That is, the elevating guide (241) may be provided with a guide protrusion (242a) moved along the elevating groove (221) formed on an outer surface of the protruding coupling portion (220) of the duct coupling portion (210), so that the elevating guide (241) may be moved upward and downward by a rotational manipulation.

The guide protrusion (242a) may be formed to protrude from a guide member (242) provided separately from the elevating guide (241), and the guide member (242) may be coupled to a portion of the elevating guide (241). Accordingly, by a rotational manipulation of the elevating guide (241), the guide protrusion (242a) may be moved along the elevating groove (221), so that the elevating guide (241) may be rotated and moved upward and downward.

In particular, the elevating groove (221) may be formed such that a lower end thereof does not reach the bottom surface of the protruding coupling portion (220). That is, the elevating groove (221) may not be open to the bottom surface of the protruding coupling portion (220). Accordingly, the guide protrusion (242a) may be prevented from being undesirably separated from the elevating groove (221).

In addition, the holder mounting module according to the embodiment of the present disclosure may further include a structure for preventing the capsule holder (300) from being tilted. That is, by an operation of moving the capsule holder (300) forward and rearward, a coupling protrusion (410) of the gripping cap (400) provided in the capsule holder (300) and the dispensing nozzle (201) positioned in the duct coupling portion may be accurately aligned vertically.

To this end, an extended rim (304) bent outward may be formed on an upper-end periphery of the capsule holder (300), and the holder coupling portion (240) of the holder mounting module (200) may further include a fixed guide (243) having a guide groove (243a) for guiding the extended rim (304) to be accommodated in the guide groove in a front-rear direction. In this case, the guide groove (243a) may be formed by bending an end periphery of the fixed guide (243) in multiple stages.

That is, as the extended rim (304) may be coupled to the guide groove (243a) in a drawer-like sliding manner, the coupling protrusion (241a) of the elevating guide (241) may easily and accurately engage with the coupling groove (303) of the capsule holder (300), and tilting of the capsule holder (300) may be prevented.

The fixed guide (243) may be coupled to the lower end of the elevating guide (241). The upper end of the fixed guide (243) and the lower end of the elevating guide (241) may be screw-coupled to each other. That is, a spiral protrusion (243b) may be formed on the outer circumferential surface of the upper end of the fixed guide (243), and a spiral groove (241b) may be formed on the inner circumferential surface of the lower end of the elevating guide (241), so that screw-type coupling may be made therebetween.

In this case, an insertion groove (243c) into which a portion of the guide member (242) is inserted to be coupled thereto may be formed in the upper end of the fixed guide (243), and a passage groove (243d) through which the guide protrusion (242a) protruding from the guide member (242) passes may be formed in the upper surface of the fixed guide (243). By such a structure, even though opposite ends of the elevating groove (221) formed in the protruding coupling portion (220) are not open, the guide protrusion (242a) may be inserted into the elevating groove (221).

Meanwhile, stopper steps (305) for blocking excessive insertion of the extended rim (304) into the guide groove (243a) of the fixed guide (243) may be formed at the opposite ends of the extended rim (304) formed on the capsule holder (300). The stopper steps (305) may be formed to have a width or height greater than that of the guide groove (243a). Accordingly, the capsule holder (300) may be prevented from being coupled in a state of being rotated to one side.

Next, the water purifier according to the embodiment of the present disclosure may include the capsule holder (300).

The capsule holder (300), together with the above-described holder mounting module (200), may constitute the capsule holder assembly. That is, by adding the capsule holder assembly to an existing water purifier, a capsule beverage may be extracted by the corresponding water purifier.

The capsule holder (300) may be defined as a device or assembly in which the capsule (1) is accommodated and from which a beverage is extracted from the capsule (1).

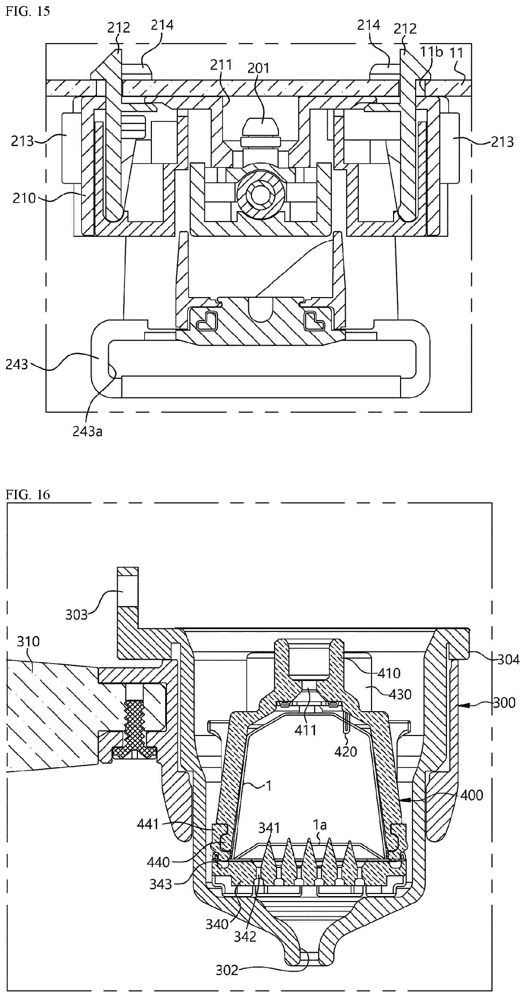

FIG. 10 shows an external structure of the capsule holder (300), and FIG. 16 shows an internal structure of the capsule holder (300).

As shown in these drawings, the capsule holder (300) may be formed to provide an accommodation space in which the capsule (1) is accommodated. The accommodation space may be formed to be open upward, so that the capsule (1) may be accommodated therein from the open upper side.

In addition, the protruding coupling portion (220) of the holder mounting module (100) may be accommodated in the accommodation space. That is, the capsule (1) may be accommodated in a lower portion in the accommodation space, and the protruding coupling portion (220) may be positioned in an upper portion in the accommodation space.

A discharge port (302) for discharging a beverage extracted from the accommodation space may be formed in the bottom surface of the capsule holder (300). An inner bottom surface of the accommodation space may be preferably formed to be gradually inclined downward toward a location where the discharge port (302) is positioned.

The handle (310) may be provided on the peripheral surface of the capsule holder (300). Accordingly, the capsule holder (300) may be easily rotated by manipulation of the handle.

In particular, a position of the handle (310) in a longitudinal direction may preferably be formed to coincide with a position of the coupling groove (303) (or the coupling protrusion on the outer surface of the elevating guide) formed in the capsule holder (300). Accordingly, accurate alignment between the coupling groove (303) and the coupling protrusion (241a) may be made on the basis of the position of the handle (310).

In addition, a support (340) on which the capsule (1) is seated may be provided in the accommodation space of the capsule holder (300). The support (340) may be provided to rupture a film (1a) sealing the capsule (1) while maintaining a state in which the capsule (1) is seated at a correct position. In this case, the capsule (1) may be provided such that the film (1a) is placed on the upper surface of the support (340).

A rupture protrusion (341) may be formed to protrude from the upper surface of the support (340). The rupture protrusion (341) may be provided to rupture the film (1a) of the capsule (1) placed on the upper surface of the support (340). The rupture protrusion (341) may be formed to have a pointed structure toward an upper side.

In addition, multiple extraction holes (342) passing through the support (340) in an up-down direction may be formed in the support (340). The extraction holes (342) may be provided to guide an extracted beverage flowing out from the capsule (1) so that the extracted beverage may flow down to the inner bottom surface of the accommodation space of the capsule holder (300).

To this end, the bottom surface of the support (340) may be disposed to be spaced apart from the inner bottom surface of the accommodation space, so that a space through which the beverage may flow may be provided therebetween.

In addition, the gripping cap (400) may be provided in the capsule holder (300).

The gripping cap (400) may be provided to grip and perforate the capsule (1) positioned in the accommodation space in the capsule holder (300).

As shown in FIG. 16, the gripping cap (400) may be accommodated in the accommodation space of the capsule holder (300) and may be formed to have a cap structure surrounding the capsule (1) in the accommodation space.

An inner surface of the gripping cap (400) may be formed to correspond to an outer surface of the capsule (1) and to be in close contact with the outer surface of the capsule (1). In this case, an inner upper surface of the gripping cap (400) may be formed to be spaced apart from the capsule (1). Drinking water for extraction may be supplied to a space defined by such a spaced portion.

The dispensing nozzle (201) exposed to the lower portion of the duct coupling portion (210) constituting the holder mounting module (200) may be coupled to the upper surface of the gripping cap (400). To this end, the coupling protrusion (410) for coupling the dispensing nozzle (201) thereto may be formed on the upper surface of the gripping cap (400).

The coupling protrusion (410) may be formed such that an end of the dispensing nozzle (201) is accommodated and communicates with the inside of the gripping cap (400). In this case, a portion in the coupling protrusion (410), in which the dispensing nozzle (201) is accommodated and coupled, may be formed to communicate with the internal space of the gripping cap (400) through a communication hole (411).

The coupling protrusion (410) may be formed at a center of the upper surface of the gripping cap (400). Accordingly, drinking water sprayed from the dispensing nozzle (201) may be supplied to an upper center inside the gripping cap (400) through the coupling protrusion (410).

In addition, one or two or more perforation protrusions (420) for perforating the capsule (1) may be formed on the inner upper surface of the gripping cap (400). The perforation protrusions (420) may be provided at a peripheral portion of the communication hole (411) communicating the coupling protrusion (410) with the space inside the gripping cap (400) among portions of the inner upper surface of the gripping cap (400).

A support rib (430) may be formed on the upper surface of the gripping cap (400), the support rib (430) being provided as a portion pressed by the pressing member (230) while preventing damage to the coupling protrusion (410). The support rib (430) may be formed along a radial direction around the coupling protrusion (410) and prevent bending deformation of the coupling protrusion (410).

In particular, the support rib (430) may be formed to be pressed by the pressing member (230) installed in the holder mounting module (100). That is, when the capsule holder (300) is moved upward in a state in which the capsule holder (300) is mounted to the holder mounting module (100), the bottom surface of the pressing member (230) may press the upper surface of the support rib (430), so that the perforation protrusions (420) of the gripping cap (400) may perforate the outer surface of the capsule (1). Of course, although not shown, the pressing member (230) may be configured to press the upper surface of the gripping cap (400) instead of the support rib (430).

Meanwhile, while drinking water is supplied through the coupling protrusion (410) of the gripping cap (400), the inside of the gripping cap (400) may be required to be in a high-pressure state. That is, considering that extraction pressure may be provided as an important factor for the taste of a beverage extracted from the capsule (1), it is preferable to prevent pressure leakage.

In order to prevent pressure leakage during such beverage extraction, an airtight ring (202) may be provided on at least one of an outer circumferential surface of the dispensing nozzle (201) or an inner circumferential surface of the coupling protrusion (410). That is, when the end of the dispensing nozzle (201) is inserted into the coupling protrusion (410), a coupled portion therebetween may be in an airtight state by the airtight ring (202).

In addition, in order to prevent pressure leakage during the beverage extraction, opposing surfaces between the support (340) and the gripping cap (400) may be formed to engage with each other.

For example, an accommodation groove (343) may be formed around the upper surface of the support (340), and an accommodation protrusion (440) accommodated in and engaged with the accommodation groove (343) may be formed on the bottom surface of the gripping cap (400). In particular, the gripping cap (400) may be provided with an airtight member (441) formed to surround a lower end of the gripping cap (400) and the accommodation protrusion (440) and configured to be in airtight contact with the accommodation groove (343) of the support (340).

Hereinafter, a process of applying the capsule holder assembly to the above-described water purifier will be described.

First, the holder mounting module (200) and the capsule holder (300), which constitute the capsule holder assembly, may be provided. The holder mounting module (200) and the capsule holder (300) may be purchased and prepared separately from the water purifier.

Then, as shown in FIGS. 2 and 3, the holder mounting module (200) may be coupled to a water purifier to which a capsule beverage function is intended to be added.

To this end, the duct coupling portion (210) constituting the holder mounting module (200) may be coupled to the outlet duct (11) of the water purifier. That is, the engaging hook (212), a portion of which protrudes from the upper surface of the duct coupling portion (210), may pass through the bottom surface of the outlet duct (11), so that the duct coupling portion (210) and the outlet duct (11) may be coupled to each other.

In particular, when the duct coupling portion (210) is aligned with the outlet duct (11), the anti-rotation protrusion (214) formed on the upper surface of the duct coupling portion (210) may be coupled to the anti-rotation groove (11c) formed in the outlet duct (11).

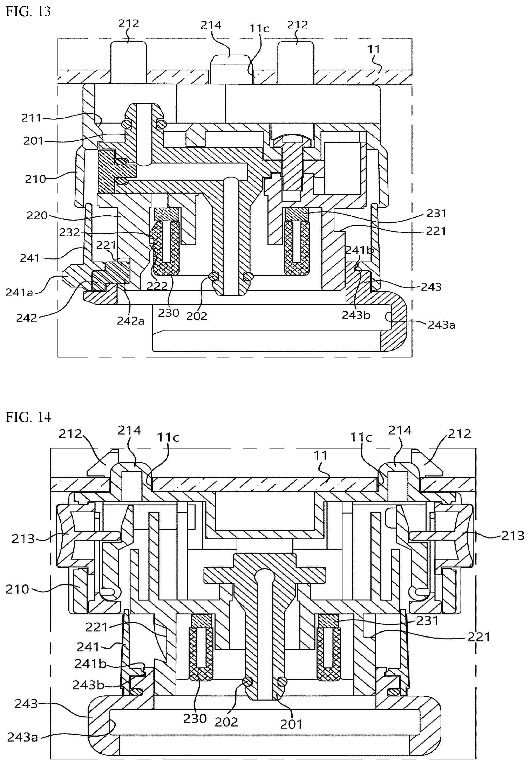

Accordingly, the duct coupling portion (210) may be constrained in vertical and horizontal directions with respect to the outlet duct (11), and undesired rotation of the duct coupling portion (210) may be prevented. This is shown in FIGS. 13 to 15.

When the water pump for pumping hot water at high pressure is not provided in the water purifier, the separately provided pump module (100) may be coupled to any one portion outside or inside the cabinet (10) of the corresponding water purifier.

In this case, the flow line (20) of the water purifier may be connected to each of the external connection fittings (104, 105) provided in the pump module (100). That is, the inflow-side flow line (21) may be connected to the first external connection fitting (104), and the outflow-side flow line (22) may be connected to the second external connection fitting (105).

In addition, the circuit board (140) of the pump module (100) may be connected to a circuit board (not shown) for controlling the corresponding water purifier so as to operate in conjunction with each other. In this case, the circuit boards may be connected to each other by using a separate wire connector.

Accordingly, the corresponding water purifier may have a function of extracting a capsule beverage.

Next, the process of extracting a capsule beverage by using the corresponding water purifier will be described.

When a user is intended to extract a capsule beverage, a desired type of beverage capsule (1) may be mounted in the accommodation space of the capsule holder (300). In this case, the beverage capsule (1) may be inserted into the accommodation space of the capsule holder (300) in a state in which a portion sealed with the film (1a) faces downward. Accordingly, the film (1a) of the beverage capsule (1) may be placed on the upper surface of the support (340) provided in the accommodation space.

When the mounting of the capsule is completed, the gripping cap (400) may be mounted. In this case, the gripping cap (400) may be mounted to cover the capsule (1) seated on the capsule holder (300). Accordingly, the coupling protrusion (410) formed on the outer surface of the gripping cap (400) may be positioned to protrude upward.

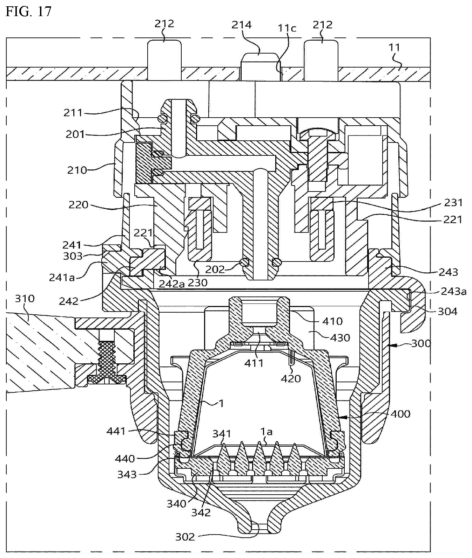

Next, the capsule holder (300) to which the capsule (1) and the gripping cap (400) are mounted may be coupled to the holder coupling portion (240) of the holder mounting module (200). To this end, the extended rim (304) of the capsule holder (300) may be inserted into the guide groove (243a) of the fixed guide (243). Accordingly, the coupling protrusion (410) formed on the gripping cap (400) in the capsule holder (300) may be positioned directly below the dispensing nozzle (201), and the coupling groove (303) of the capsule holder (300) may be aligned with the coupling protrusion (241a) of the elevating guide (241). In this case, since the extended rim (304) is coupled to the guide groove (243a) while being inserted into and moved along the guide groove (243a) in a drawer-like sliding manner, the operation of aligning the coupling protrusion (410) directly below the dispensing nozzle (201) may be easily and accurately performed. This state is shown in accompanying FIG. 17.

Thereafter, the handle (310) may be manipulated to rotate the capsule holder (300) in a horizontal direction. In this case, the fixed guide (243) to which the capsule holder (300) is coupled and the guide member (242) coupled to the fixed guide (243) may be rotated, and accordingly, the guide protrusion (242a) of the guide member (242) may move along the elevating groove (221) formed in the protruding coupling portion (220), so that the holder coupling portion (240) and the capsule holder (300) coupled thereto may be moved upward.

Then, by the rotation and upward movement of the capsule holder (300), the end of the dispensing nozzle (201) may be gradually inserted into the coupling protrusion (410) formed at the center of the upper surface of the gripping cap (400).

At the same time, by the rotation and upward movement of the capsule holder (300), the support rib (430) formed around the upper surface of the gripping cap (400) may receive a pressing force of the pressing member (230) installed in the protruding coupling portion (220) of the holder mounting portion (100) and may be pressed downward. Accordingly, the outer surface of the capsule (1) may be gradually brought into close contact with the inner surface of the gripping cap (400), and in this process, the perforation protrusions (420) in the gripping cap (400) may perforate the outer surface of the capsule (1). In addition, the rupture protrusion (341) formed on the upper surface of the support (340) may rupture the film (1a) of the capsule (1).

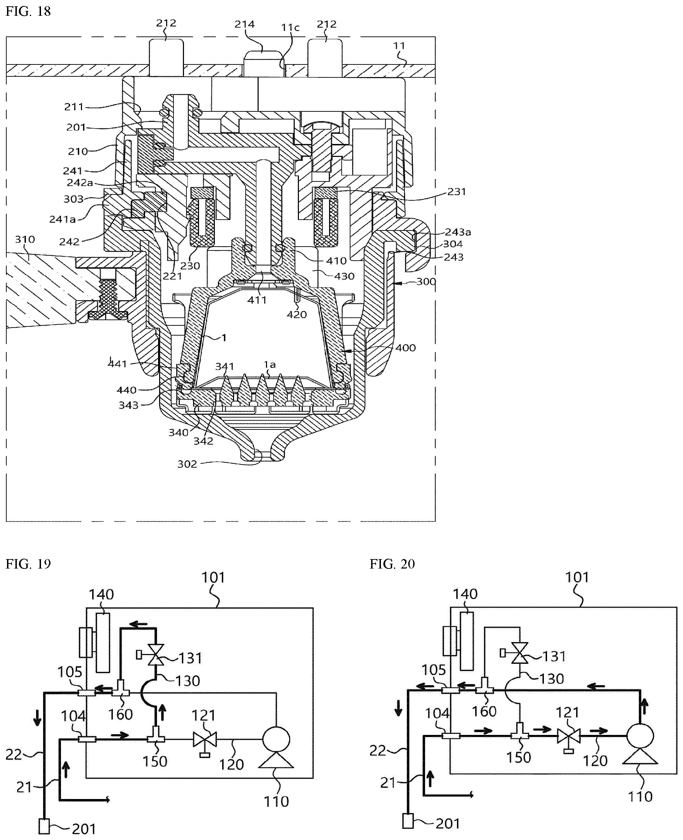

Then, when the capsule holder (300) is completely moved upward with respect to the coupling protrusion (410), the accommodation protrusion (440) formed on the bottom surface of the gripping cap (400) may be accommodated in the accommodation groove (343) formed on the upper surface of the support (340) and maintained in airtight contact therewith by the airtight member (441). In this case, the dispensing nozzle (201) may be completely inserted into the coupling protrusion (410) of the gripping cap (400) and maintained in airtight contact therewith by the airtight ring (202). This is shown in FIG. 18.

Therefore, preparation for extracting a capsule beverage may be completed by the above-described process.

After the preparation for extraction is completed, high-temperature pressurized water may be provided by a user's manipulation.

That is, when a user performs a manipulation for extracting a capsule beverage, the water pump (110) constituting the pump module (100) may be operated. In this case, the first valve (121) may be opened and the second valve (131) may be blocked, so that drinking water may flow only through the first guide flow path (120).

Accordingly, the drinking water in the flow line (20) may be pumped by the operation of the water pump (110), pass through the filter (30) in the cabinet (10), and then flow along the first guide flow path (120) in the pump module (100).

Subsequently, the drinking water may reach a set water pressure while passing through the water pump (110), then sequentially pass through the second external connection fitting (105) and the outflow-side flow line (22) connected thereto, and be provided to the dispensing nozzle (201). This is as shown in FIG. 20.

In addition, after passing through the dispensing nozzle (201), the drinking water may be supplied into the gripping cap (400) through the communication hole (411) in the coupling protrusion (410) coupled thereto. In this case, since the inside of the gripping cap (400) is sealed from an external environment, the drinking water supplied into the gripping cap (400) may flow into the capsule (1) through a perforated portion of the capsule (1) in the gripping cap (400). Accordingly, a raw material stored in the capsule (1) may be extracted by the drinking water.

In addition, the extracted beverage may pass through the ruptured film (1a) of the capsule (1), pass through the multiple extraction holes (342) formed in the support (340), flow down to the inner bottom surface of the capsule holder (300), pass through the discharge port (302) and fall, and may be contained in the cup (2) positioned directly below the capsule holder (300).

After the extraction of the capsule beverage is completed, the capsule holder (300) may be rotated in a direction opposite to a coupling direction.

Accordingly, while the guide protrusion (301) of the guide member is rotated along the elevating groove (221) formed in the protruding coupling portion (220), the capsule holder (300) may be gradually moved downward.

In addition, while the capsule holder (300) is moved downward, the pressing member (230) in the protruding coupling portion (220) may push the gripping cap (400) coupled to the dispensing nozzle (201) by a restoring force of the restoring member (130).

Accordingly, a problem in which the gripping cap (400) is not separated from the dispensing nozzle (201) may be prevented, and the gripping cap (400) and the capsule holder (300) may be separated together from the holder mounting portion (100).

Thereafter, when the capsule holder (300) is separated, the gripping cap (400) may be separated from the inside of the capsule holder (300). Accordingly, the capsule in the capsule holder (300) may be in a removable state, and the user may remove the capsule from the capsule holder (300).

Meanwhile, when a user wants to receive hot water or purified drinking water without extracting a capsule beverage, the water purifier may be used with the capsule holder (300) separated from the holder mounting module (200).

Of course, the water purifier may also be used with the capsule holder (300) mounted to the holder mounting module (200) in a state in which no capsule (1) is provided in the capsule holder (300).

When the hot water or the purified drinking water is supplied, operation of the water pump (110) constituting the pump module (100) may be stopped, the first valve (121) may be blocked, and the second valve (131) may be opened, so that the drinking water may flow only through the second guide flow path (130). This is shown in FIG. 19.

Accordingly, the drinking water in the flow line (20) may be provided directly to the dispensing nozzle (201) along the second guide flow path (130) without passing through the water pump (110), thereby enabling stable discharge.

As described above, the water purifier of the present disclosure may have a function of extracting a capsule beverage as the capsule holder assembly is selectively applied thereto.

In addition, in the water purifier of the present disclosure, the capsule holder assembly may be mounted to the existing water purifier without changing a structure of the existing water purifier or with only a simple change, and thus a user may directly mount the capsule holder assembly.

In addition, by additionally providing the pump module (100), the water purifier of the present disclosure may perform a function for extracting a capsule beverage even in an existing water purifier in which a pump for extracting the capsule beverage is not provided.

In addition, according to the water purifier of the present disclosure, hot water, purified water, or an extracted beverage may be selectively provided through the same outlet, and when the hot water or the purified water is provided, the water pump (110) may not be operated, thereby preventing drinking water from flowing to the surroundings due to excessive water pressure.

Meanwhile, the capsule holder assembly constituting the water purifier of the present disclosure may also be implemented in a form different from the structure of the above-described embodiment.

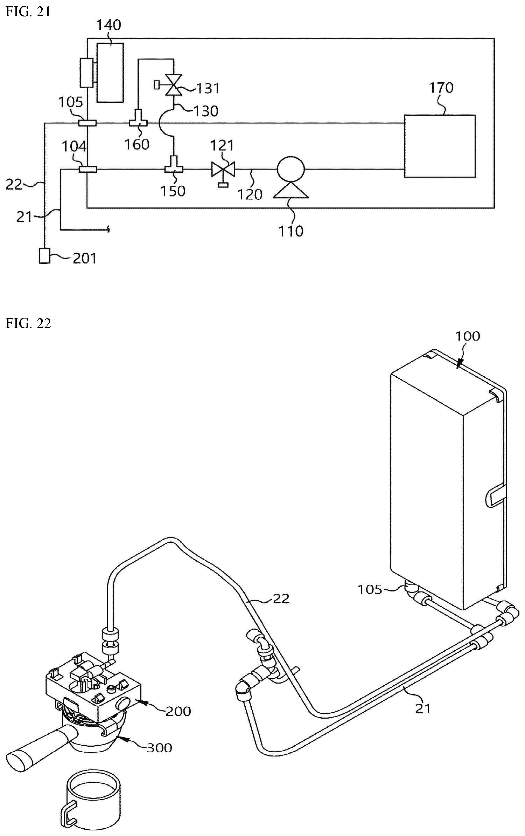

For example, as shown in FIG. 21, according to another embodiment of the capsule holder assembly of the water purifier of the present disclosure, the pump module (100) may further include a heater (170). That is, when a heater is not provided in a water purifier, the pump module (100) including the heater (170) may be applied to the corresponding water purifier, so that high-temperature drinking water for extracting a capsule beverage may be provided.

In this case, the heater (170) may be positioned between the rear end of the water pump (110) of the first guide flow path (120) and the outlet of the first guide flow path (120) in the pump module (100).

Although not shown, the heater (170) may be provided as a module separate from the pump module (100).

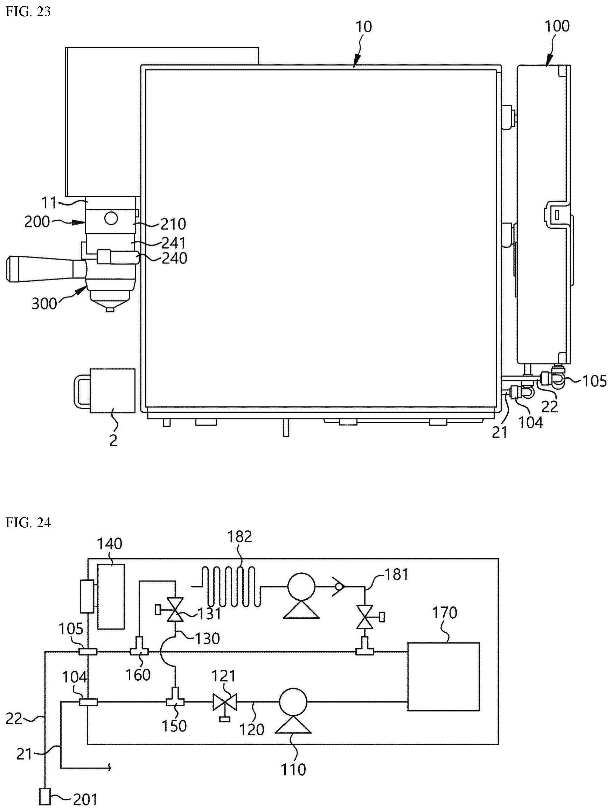

When the heater (170) is added to the pump module (100), the pump module (100) may have a larger size than a product without the heater (170). Considering this, the pump module (100) including the heater (170) may preferably be installed outside the cabinet (10) as shown in FIG. 23.

According to another embodiment of the capsule holder assembly of the water purifier of the present disclosure, a water recovery part (180) may be provided in the capsule holder assembly.

The water recovery part (180) may serve to recover and store drinking water remaining on a flow path connected from the dispensing nozzle (201) to the heater (40, 170). That is, the drinking water remaining in the flow path may cool as its temperature decreases from the moment at which beverage extraction is stopped. Accordingly, when a capsule beverage is later extracted, the cooled drinking water may be discharged through the dispensing nozzle (201) until the drinking water heated while passing through the heater (40, 170) is supplied to the dispensing nozzle (201).

Considering this, when extraction of the capsule beverage is completed, residual water remaining in a flow path from the dispensing nozzle (201) to the heater (40, 170) may be recovered to and stored in the water recovery part (180), so that when a capsule beverage is subsequently extracted, the residual water may be preferentially heated and supplied.

The water recovery part (180) may be in the pump module (100).

For example, the water recovery part (180) may be configured to allow drinking water to flow along a third guide flow path (181) and to be stored therein. In this case, the inlet of the third guide flow path (181) may be additionally connected to the inflow line (102) through which drinking water flows into the pump module (100), and the outlet of the third guide flow path (181) may be connected to the outflow line (103) through which drinking water flows out.

In particular, the water recovery part (180) may include a storage part (182) for storing residual water recovered through the third guide flow path (181).

The storage part (182) may preferably be formed to have a capacity of drinking water equal to or greater than at least a capacity of drinking water from the heater (40, 170) to the dispensing nozzle (201).

The storage part (182) may be variously configured.

As an example, as shown in FIG. 24, the storage part (182) may be formed as a tube connected to the third guide flow path (181) or extending from the third guide flow path (181). That is, the recovered drinking water may be stored in the tubular storage part (182).

To this end, the tubular storage part (182) may be formed to have a length greater than a flow path from the heater (40, 170) to the dispensing nozzle (201). In this case, the tubular storage part (182) may be wound around one portion or may be formed to extend along an empty space in the pump module (100).

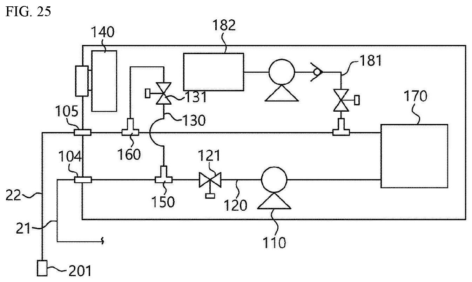

As another example, as shown in FIG. 25, the storage part (182) may be formed in a box shape in which recovered water is stored. That is, the recovered water may be stored in the box-shaped storage part (182), and then when hot water is used, the recovered water stored in the box-shaped storage part (182) may be discharged and then reheated.

The box-shaped storage part (182) may be formed to have a size sufficient to store a set amount of recovered water.

As described above, the water purifier of the present disclosure or the capsule holder assembly provided in the water purifier may be implemented in various ways.

As described above, although all the components constituting the embodiment according to the present disclosure have been described as being combined into a single unit or operating in combination, the present disclosure is not necessarily limited to such embodiments. That is, within the scope and spirit of the present disclosure, all the components may operate by being selectively combined into one or more units. In addition, the terms "include," "comprise," or "have," as used herein, unless otherwise specifically stated, imply that the relevant component may be present, and therefore should be construed to include other components rather than to exclude other components. All terms, including technical or scientific terms, unless otherwise defined, have the same meaning as commonly understood by those skilled in the art to which the present disclosure belongs. Commonly used terms, such as terms defined in the dictionary, should be interpreted to be consistent with their contextual meanings in the relevant technology and should not be interpreted in an idealized or overly formal sense unless expressly defined in the present disclosure.

The foregoing description is merely illustrative of the technical idea of the present disclosure, and it will be understood by those skilled in the art that various modifications and variations may be made without departing from the essential characteristics of the present disclosure. Accordingly, the embodiments disclosed herein are not intended to limit the technical idea of the present disclosure, but rather to explain it, and the scope of the technical idea of the present disclosure is not limited by such embodiments. The scope of protection of the present disclosure shall be interpreted on the basis of the following claims, and all technical ideas falling within the equivalent scope thereof shall be construed as being included within the scope of rights of the present disclosure.

## Claims

1. A water purifier comprising:
a cabinet defining an exterior of the water purifier and having, at one end thereof, an outlet duct in which a discharge nozzle is positioned;
a flow line provided in the cabinet and configured to guide a flow of drinking water to the discharge nozzle;
a heater configured to heat the drinking water;
a pump module having a water pump configured to pump the drinking water to reach a set water pressure, the pump module being modularized and provided in a casing separate from the cabinet;
a holder mounting module coupled to the outlet duct and having a dispensing nozzle for supplying the drinking water, the dispensing nozzle being connected to the discharge nozzle; and
a capsule holder selectively mounted to the holder mounting module, the capsule holder having an accommodation space in which a capsule is accommodated and having a discharge port formed in a bottom surface thereof.

2. The water purifier of claim 1, wherein the pump module comprises:
a first connection line connected to the flow line and configured to guide the drinking water to the water pump; and
a second connection line connected to provide, to the flow line, high-pressure drinking water that has passed through the water pump.

3. The water purifier of claim 1, wherein the heater is provided in the pump module.

4. The water purifier of claim 1, wherein the heater is provided separately from the pump module.

5. The water purifier of claim 1, wherein the pump module is coupled to an outer surface of the cabinet.

6. The water purifier of claim 1, wherein the pump module is installed inside the cabinet.

7. The water purifier of claim 1, wherein the holder mounting module comprises:
a duct coupling portion coupled to the outlet duct; and
a holder coupling portion to which the capsule holder is coupled.

8. The water purifier of claim 7, wherein the duct coupling portion has an upper surface, a peripheral wall, and a bottom surface and is formed to have an installation space therein.

9. The water purifier of claim 8, further comprising:
an engaging hook having a first end positioned in the duct coupling portion and a second end passing sequentially through the upper surface of the duct coupling portion and a bottom surface of the outlet duct and retained in the outlet duct.

10. The water purifier of claim 9, wherein the engaging hook comprises a plurality of engaging hooks, and the plurality of engaging hooks are installed to respectively pass through opposite side portions of the upper surface of the duct coupling portion.

11. The water purifier of claim 10, wherein push buttons configured to manually press the plurality of engaging hooks are respectively provided on opposite side wall surfaces of the duct coupling portion.

12. The water purifier of claim 7, wherein an anti-rotation protrusion and an anti-rotation groove are formed on opposing surfaces between the outlet duct and the duct coupling portion so as to engage with each other.

13. The water purifier of claim 12, wherein the anti-rotation protrusion comprises a plurality of anti-rotation protrusions and the anti-rotation groove comprises a plurality of anti-rotation grooves, and the plurality of anti-rotation protrusions and the plurality of anti-rotation grooves prevent rotation of the duct coupling portion.

14. The water purifier of claim 7, wherein an accommodation hole open to an upper surface of the duct coupling portion is formed in the duct coupling portion such that when the duct coupling portion is coupled to the outlet duct, an end of the discharge nozzle is accommodated in the accommodation hole,
wherein the dispensing nozzle is positioned in the duct coupling portion, a first end of the dispensing nozzle is formed to be exposed in the accommodation hole so as to be accommodated in the discharge nozzle, and a second end of the dispensing nozzle is formed to pass through a bottom surface of the duct coupling portion and protrude downward.

15. The water purifier of claim 14, wherein the dispensing nozzle is formed such that the first end and the second end of the dispensing nozzle are positioned on different vertical lines.

16. The water purifier of claim 7, wherein a protruding coupling portion is formed to protrude from a bottom surface of the duct coupling portion,
wherein an elevating groove gradually inclined upward toward a lateral side is formed in an outer circumferential surface of the protruding coupling portion.

17. The water purifier of claim 16, wherein the holder coupling portion comprises:
an elevating guide coupled to the protruding coupling portion and configured to be moved upward and downward along the protruding coupling portion by a rotational manipulation in a horizontal direction; and
a guide member coupled to the elevating guide and having a guide protrusion accommodated in the elevating groove and configured to be moved along the elevating groove.

18. The water purifier of claim 17, wherein a coupling protrusion is formed on an outer surface of the elevating guide,
wherein a coupling groove into which the coupling protrusion is inserted so as to be coupled thereto is formed in the capsule holder so that the elevating guide is rotated by rotation of the capsule holder.

19. The water purifier of claim 17, further comprising:
an extended rim bent outward from an upper-end periphery of the capsule holder; and
a fixed guide coupled to a lower end of the elevating guide and having a guide groove such that opposite side portions of the extended rim of the capsule holder are accommodated in the guide groove in a front-rear direction.

20. The water purifier of claim 19, wherein stopper steps configured to restrict insertion of the extended rim into the guide groove of the fixed guide are respectively formed on the opposite side portions of the extended rim.
